# EUROPEAN PATENT SPECIFICATION

(11) **EP 2 998 411 B1**
(45) Date of publication and mention of the grant of the patent: **07.06.2017**
(21) Application number: 15000806.8
(22) Date of filing: 18.03.2015
(51) Int. Cl.: C22B 1/00, C01G 49/00, C22B 7/00

(54) **METHOD FOR PROCESSING REFUSE OF FLOTATION PROCESSING OF ORE CONCENTRATES CONTAINING IRON**
VERFAHREN ZUR VERARBEITUNG VON ABFALL AUS DER FLOTATIONSBEHANDLUNG EISENHALTIGER ERZKONZENTRATE.
PROCÉDÉ DE TRAITEMENT DE DÉCHETS PROVENANT DE DÉCHETS DU TRAITEMENT PAR FLOTATION DE CONCENTRATÉS DE MINERAI CONTENANT DU FER.

(43) Date of publication of application: 23.03.2016
(73) Proprietor: IRT AD, 1407 Sofia (BG)
(72) Inventor: Dragomirov, Alexandar Assenov, Sofia (BG); Teoharov, Lubomir Dimitrov, Sofia (BG)
(74) Representative: Nesheva, Valentina Velikova

(56) References cited:
- CN-A- 102 674 643
- HERNANDEZ ET AL: "Recovery of metals from Cuban nickel tailings by leaching with organic acids followed by precipitation and magnetic separation", JOURNAL OF HAZARDOUS MATERIALS, ELSEVIER, AMSTERDAM, NL, vol. 139, no. 1, 24 November 2006 (2006-11-24), pages 25-30, XP005779813, ISSN: 0304-3894, DOI: 10.1016/J.JHAZMAT.2006.03.074
- KIM J K ET AL: "Recovery of iron as a form of ferrous acetate precipitates from low-grade magnetite ore", CHEMICAL ENGINEERING RESEARCH AND DESIGN, PART A, INSTITUTION OF CHEMICAL ENGINEERS, XX, vol. 88, no. 11, 1 November 2010 (2010-11-01), pages 1467-1473, XP027481167, ISSN: 0263-8762, DOI: 10.1016/J.CHERD.2009.08.011 [retrieved on 2009-09-16]
- PAL A ET AL: "Treatment of iron ore slime for value addition", HYDROMETALLURGY, ELSEVIER SCIENTIFIC PUBLISHING CY. AMSTERDAM, NL, vol. 105, no. 1-2, 1 December 2010 (2010-12-01), pages 30-35, XP027486209, ISSN: 0304-386X, DOI: 10.1016/J.HYDROMET.2010.07.005 [retrieved on 2010-07-15]
- HE B ET AL: "Recovery of iron oxide concentrate from high-sulfur and low-grade pyrite cinder using an innovative beneficiating process", HYDROMETALLURGY, ELSEVIER SCIENTIFIC PUBLISHING CY. AMSTERDAM, NL, vol. 104, no. 2, 1 September 2010 (2010-09-01), pages 241-246, XP027219612, ISSN: 0304-386X [retrieved on 2010-08-16]
- LEE ET AL: "Dissolution of iron oxide using oxalic acid", HYDROMETALLURGY, ELSEVIER SCIENTIFIC PUBLISHING CY. AMSTERDAM, NL, vol. 87, no. 3-4, 19 June 2007 (2007-06-19), pages 91-99, XP022120187, ISSN: 0304-386X, DOI: 10.1016/J.HYDROMET.2007.02.005

## Description

### TECHICAL FIELD

The present invention relates to extraction of iron from middling slime (waste) which is a refuse of the flotation processing of ore concentrates containing iron with a subsequent obtaining of iron oxide compounds - hematite, magnetite (iron(II, III) oxide), hydrated ferric oxide (ferrihydrite) and ferric hydroxide.

### BACKGROUND OF THE INVENTION

The refuse of the flotation processing of ore concentrates containing iron is an iron containing silicate in which the major phases are fayalite and magnetite but residual quantities of compounds of other metals are contained as well in the form of their oxides or silicates as well as free silicone dioxide.

Methods for extraction of metals from ores using oxalic acid are known. In the Chinese patent application CN 102674643 A is implemented a method for leaching of alluvial materials and clays containing iron. In the Greek patent GR 1 002 723 B the oxalic acid is used for the extraction of iron from industrial waste and ores. The leaching with oxalic acid is implemented with unsuitable for treatment materials such as ceramic powders with the purpose to decrease the iron content in view of its tendency to react with the ceramic glazes (see EP 0 514 577 A1).

In the Chinese Patent Application CN 1962437 A is disclosed a method for leaching with oxalic acid of a silicone sand covered by an iron film, the method including the following steps: putting the sand in 1-10 % oxalic acid solution in the ratio 100:100, heating to 80-90°C stirring vigorously for 1-5 hours which leads to dissolving the iron film from the sand surface and forming of iron oxalate; separation of the solid from the liquid, washing with pure water and filtering to obtain the product which however is not a high purity iron compound.

In the Bulgarian Patent BG 66201 B1 is disclosed a process for recycling of refuses from the production of copper containing iron silicate - fayalite, the process comprising the following steps: oxidation of fayalite in air at the temperature of 700-1100°C for 3-5 hours; addition of hydroxide or carbonate of an alkali metal and treating the mixture till a mixture of silicate of iron oxides is obtained; addition of water and heating to 100°C or at higher pressure and temperature of 150-250°C; separation of the undissolved iron oxides by precipitation or filtration and washing with water or aqueous solution of a mineral acid (hydrochloric acid, sulphuric acid). In this patent is implemented a preliminary separation of the silicate phase by a high temperature dissolution of the silicone matrix with alkali reagents whereupon it passes into the soluble forms of alkali silicates with a different modulus. However at these conditions copper compounds are transformed into copper oxide which remains as impurity in the iron containing product and this renders the process not useful for the iron oxide pigments industry. Furthermore this process does not use leaching with oxalic acid and does not result in the dissociation of iron compounds with high purity.

The implementation of all these patented technological approaches does not overcome significant problems in this technical field.

In the first place these methods allow the processing only of such materials in which the iron content is low. At high iron content the selected conditions lead to the dissolution of a significant amount of the silicate backbone and the resulting iron containing products are polluted with colloid silicone dioxide and therefore do not possess high purity.

Another common feature of these processes is the implementation of chemical and photochemical reduction of the trivalent forms to divalent forms of iron during the leaching of the iron with oxalic acid, using the huge difference in the solubility of both oxalates. Divalent oxalate is practically insoluble and thus the effectiveness of the leaching is increased but in the presence of alkali earth metals which are always present in the industrial waste of the ore output the oxalate precipitate is accompanied by calcium and magnesium oxalates which have commensurable insolubility and are not separated from the iron phase.

Another problem is the formation of mixed phases during the step of separation of the precipitates from the oxalate solution with no possibility of their separation if no reverse dissolution of the iron oxalate and its subsequent secondary precipitation is not applied which leads to the inclusion of an additional step and lower effectiveness of the process.

In Hernandez et al., "Recovery of metals from Cuban nickel tailings by leaching with organic acids followed by precipitation and magnetic separation", Journal of Hazardous Materials, ELSEVIER, Amsterdam, NL, 24 November 2006, pages 25-30, XP005779813, ISSN: 0304-3894, D0I: 10.1016/J.JHAZMAT, 2006.03.074 is disclosed a method of extraction of metals, including iron, from flotation tailings of Cuban nickel ore with a comparatively high iron content (44.2%). The method comprises a step of percolation leaching at ambient temperature during 5 days with a mixture of analytic tartaric acid (>99.7%) and analytic oxalic acid (>99.0%) wherein the quantity of tartaric acid is 3 times greater than the quantity of oxalic acid; a step of long precipitation at an ambient temperature (16 days) and a thermic processing of the precipitate. In the article is described also a subsequent step of magnetic separation of the secondary tailings from the leaching step to enrich its iron content and its direct use as a raw material in the steel industries. The method disclosed by Hernandez et al. is the closest prior art for the present application but it has significant differences therefrom, and namely: In the method according to the present invention the magnetic separation is a preliminary step preceding the leaching step and it is intended to separate the iron-containing phase from the silicate non-magnetic phase and in the method of Hernandez et al. this step is carried out after the leaching and has a different purpose, to enrich the iron content. Furthermore the leaching step in Hernandez et al. is radically different from the leaching step of the proposed method. In Hernandez et al. the leaching is percolation leaching, it is carried out with a mixture of two different organic acids, the oxalic acid being in minor quantity in the proportion. Besides this step is carried out at a low (ambient) temperature for a long duration of time (5 days) and the oxalic acid concentration is very high (>99.0%). In the proposed method of the present invention the leaching has duration 1-2 hours at a high temperature (95°C) and the oxalic acid concentration is much lower (12-15%). Furthermore in the leaching step takes part another reagent, hydrogen peroxide which is not an organic acid and which is not mentioned in Hernandez et al. The proposed method of the invention has additional steps, like step 2 - treatment with sodium hydroxide solution and separation in decanter centrifuge. The precipitation step in both methods is quite different. In Hernandez et al. this step is carried out for a very long time (16 days) and is in fact self-sedimentation, while in the proposed method the duration of the stay in the precipitator is 1 to 2 hours and the precipitation at step 5 continues 1 hour, both steps being carried out at different pH values, i.e. the process is controlled. As a result of the differences between both methods is obtained an end product with a very high iron content (at least 82% of iron compounds, while in Hernandez et al. the product has much lower iron content, it is a side product and the main purpose of the method is the separation of nickel and cobalt from the tailings from flotation processes.

All these problems of the known processes are overcome by the proposed in the present patent application method for processing refuse of flotation processing of ore concentrates containing iron comprising flotation iron silicate (fayalite) containing magnetite and free silicone dioxide.

### DISCLOSURE OF THE INVENTION

The method for extraction of iron from refuse of flotation processing of ore concentrates containing iron according to the invention comprises treatment of the refuse with an aqueous solution of oxalic acid whereupon the iron passes into a soluble form, with subsequent precipitation in the form of hydroxide and thermal treatment till its transformation into iron oxide or hydrated hematite (hydrated ferric oxide - ferrihydrite). The method uses dibasic organic acid (oxalic acid) because of its tendency to form stable complexes with iron and because of its low acidic aggressiveness, and during its use no harmful gases are eliminated into the environment.

The present method applies a novel approach which activates the properties of the system oxalic acid/iron containing phases and thus the leaching is facilitated and the purity of the resulting products is increased.

The proposed method is directed mainly to processing of flotation refuses with high content of fayalite but it is suitable as well for other iron containing residual products of industrial activity.

The starting material is refuse of flotation processing of ore concentrates containing iron containing as major components fayalite, magnetite and free silicone dioxide in amorphous and crystalline forms. Accompanying elements at impurity levels are copper, calcium, magnesium, zinc and aluminum, and arsenic and lead are present at trace levels.

The substance of the method consists in the following:
Step 1: The starting raw material is subjected to a preliminary wet magnetic separation whereupon the iron containing phase is separated from the silicate non-magnetic phase. The purpose of this treatment is to ensure acidic treatment only of the iron containing component while the free silicate phase is not subjected to dissolution. The silicate suspension is filtered and the clear filtrate is recycled into the process at the step of wet magnetic separation.
Step 2: The iron containing pulp is mixed with 10% sodium hydroxide solution and is treated at 45 to 100°C for 1 to 3 hours. The resulting suspension is transferred into a decanter centrifuge and separated. The solution containing copper and zinc hydroxides, sodium aluminate and sodium silicate is neutralized to pH 6.5 - 7.0 whereupon a mixed hydrogel is precipitated and the latter is filtered, washed and dried.
Step 3: The iron containing pulp obtained in the decanter centrifuge and purified from copper, zinc and aluminum is treated with a hot 12-15% oxalic acid solution and is treated in a reactor at continuous stirring and temperature of 95°. The weight ratio of pulp/solution is 10:90. The treatment has duration of 1 to 2 hours. During the treatment a 3-5% hydrogen peroxide solution is added continuously to convert the divalent iron oxalate into a trivalent iron oxalate. In this manner a biphasic heterogenic system is obtained, this system being composed of silicate concentrate containing magnetite and trivalent iron oxalate solution. Because of the magnetic properties of the silicate phase magnetic separation is applied directly on the reaction medium. Thus the magnetic phase contains only magnetite incorporated into a silicate matrix and it is removed from the system by a separator.
Step 4: This step relies on the property of the oxalate ion to stabilize the iron in the oxalate complex and to displace the region of formation of iron hydroxide to higher pH values. The oxalate solution obtained after the separation of the solid silicate phase is directed to a precipitator wherein it is mixed with an alkali hydroxide solution, mainly sodium hydroxide at pH from 6.5 to 7.0 at temperature of 20 to 25°C and the duration of the stay in the precipitator is 1 to 2 hours. Because of the stabilizing action of the oxalate ion the iron is precipitated only partially at this pH to render a light brown iron hydroxide co-precipitated with the compounds of silicone and alkali earth metals which are dissolved by the oxalic acid during the leaching of the fayalite and they are transformed into hydroxides at the neutral pH value. The precipitate is filtered and washed till neutral reaction. It is dried at 140-80°C.
Step 5: The filtrate from the precipitator is a non-precipitated practically pure solution of trivalent iron oxalate. For the complete precipitation of the iron the solution is mixed in a precipitator with alkali hydroxide solution at pH 12-14, the iron oxalate solution being admixed to the alkali hydroxide solution and allowed to age for 1 hour at temperature of 55-60°C in the stock solution. The mixture is filtered and washed once with a pure solution of alkali hydroxide whereupon the precipitate is washed with warm water to neutral reaction and dried at 140°C.

The RFA analysis and MS analysis show a structure of hydrated ferric oxide (ferrihydrite) with the qualification "chemically pure" without additional inclusions of other iron containing phases.

A variation of this method is the co-precipitation of the iron hydroxide and the alkali earth metals and silicone hydroxides in the neutral region according to the conditions of Step 4 but without the preliminary separation of the magnetite containing silicate phase by means of the magnetic separator implemented at step 3. The purpose of this variation is to broaden the potentialities of the present invention creating conditions for transformation of the magnetite containing silicate phase. The precipitate obtained at Step 4 during the co-precipitation of the oxalate waste in the neutral pH region, upon drying is treated with 10% sulphuric acid solution. During this treatment the silicate compounds transit into a precipitate of silicone dioxide hydrogel with inclusions of calcium sulphate which are separated by means of filtration and the iron remains in the solution in the form of iron sulphate. The secondary precipitation allows obtaining of iron hydroxides free of silicone and calcium.

A third variation of the method is obtaining of hydrated magnetite by means of homogeneous reduction in a solution using the reducing properties of the oxalic acid. The aim of this variation is not only to transform the alkali silicates into a silicon acid which is separated from the system in the form of hydrogel but also to ensure the presence of oxalic acid due to the neutralization of the sodium oxalate contained in the wet precipitate. In this variation the oxalate suspension obtained at Step 3 is partly precipitated in the neutral pH region according to the conditions of Step 4. The resulting hydrogel of iron hydroxide in a stock medium of alkali solution of sodium oxalate and containing silicate compounds is separated from the liquid phase by filtration. The wet precipitate is dissolved without preliminary washing and drying in a 10% sulphuric acid solution and because of this the ferric sulphate is reduced partly to ferric sulphate by the oxalic acid. The suspension is filtered again. The filtrate which is a mixture of divalent and trivalent iron sulphate is added to a sodium hydroxide solution obtaining a mixed hydrogel of divalent and trivalent forms of the iron. Filtering, washing and drying yield a product having a deep black color and the Mossbauer analysis registered the ratio Fe(III) : Fe(II) = 2.11 : 0.89 which is characteristic for the ratio in the magnetite.

The present method does not create novel chemical reactions but uses known chemical interactions applying these in a non-conventional manner overcoming the problems of the known practice by means of differences from this practice which are as follows:
1. To the treatment is subjected a raw material having a content of magnetite, fayalite and free silicone dioxide in a ratio of the magnetite to fayalite of 18:82 to 78:22. During the chemical treatment of the raw material the latter is subjected to a wet magnetic separation which separates the iron containing phase from the non-magnetic phase. In this manner the silicate phases are brought out of the system and the concentration of silicone oxalate complexes at the subsequent steps of leaching is reduced.
2. Another difference from the existing methods is the treatment of the iron containing pulp with an alkali hydroxide solution, mainly sodium hydroxide, with a concentration from 5 to 10 % by weight at low temperature from 5 to 65°C to extract the copper, zinc, aluminum compounds and in a small degree - the silicon compounds. The solution is then heated to 95-100°C to transform the copper hydroxide to copper oxide and remove it by filtration.
3. The purified iron containing pulp is treated with an oxalic acid solution with concentration of 12 to 15% at temperature of 95°C to extract the iron in the form of oxalate complexes adding continuously in the process a hydrogen peroxide solution with concentration of 3 to 5% to maintain an oxidative medium and to have oxalate of trivalent iron only formed.
4. The reaction system is treated directly with a magnetic separator to separate the magnetite containing phase of the oxalate solution.
5. After the separation of the magnetite phase the solution is precipitated partly at pH 7.0-7.5 in order to co-precipitate the alkali earth metal compounds, silicone and aluminum, with the iron hydroxide obtained in the process of the precipitation, the iron hydroxide serving as an adsorption phase.
6. Treating the iron containing pulp with oxalic acid under the conditions of 3. but without the separation of the magnetite by the magnetic separator of 4. and with direct precipitation up-to neutral values of pH, with separation of the precipitate from the solution of the trivalent iron oxalate.
7. Treating of the iron containing pulp with oxalic acid under the conditions of 3. but without the separation by the magnetic separator of 4. and with direct co-precipitation to pH=12 of the iron containing phases.
8. Filtration and treatment of the pulp under the conditions of 7., the pulp being dried at 140°C and thereafter dissolved in a 10% sulphuric acid solution, filtered to separate the silicate phases of the iron containing solution and then the filtrate is precipitated again at pH 7-10 to obtain a pure iron hydroxide precipitate.
9. Heating of the precipitate of 6. and 7. to 850-950°C in an oxidative medium with the purpose to convert the magnetite into hematite.
10. The purified oxalate solution of the trivalent iron of 5. is precipitated directly at pH=12-14 to obtain a hydrated hematite (ferrihydrite).
11. The pulp of 7. is dissolved directly into 10% sulphuric acid solution, without a preliminary washing and drying. After filtration of the suspension the clear filtrate is heated to 50°C before it is precipitated at pH 12 in a sodium hydroxide solution obtaining iron hydroxide with the structure of a hydrated magnetite.

Hereafter the invention will be explained by reference to the Examples of its embodiment which however are only illustrative and do not limit in any way its scope.

### EXAMPLES

The functionality of the method is disclosed by means of treatment of samples of the raw material differing by its composition and taken at different times and from different places of the waste-depots for depositing industrial refuse. The ratio of the magnetite to fayalite is determined by the results of X-ray phase and Mossbauer analyses. The X-ray phase analysis is carried out by using Co-K alpha radiation, scanning step of the spectrum 0.05o and increased time for collecting the impulses - 5s. The phase identification is made by means of the data base JCPDS. The Mossbauer spectra are measured with a source 57Co/Rh (Activity@15 mCi), standard - alpha Fe.

The composition of the samples is the following:
Sample 1: Content of total iron expressed as Fe - 29%. Content of free silicone dioxide 14%. Ratio of magnetite to fayalite 47:53.
Sample 2: Content of total iron expressed as Fe - 51%. Content of free silicone dioxide 9 %. Ratio of magnetite to fayalite 78:22.
Sample 3: Content of total iron expressed as Fe - 36 %. Content of free silicone dioxide 16 %. Ratio of magnetite to fayalite 67:33.
Sample 4: Content of total iron expressed as Fe - 9 %. Content of free silicone dioxide 26 %. Ratio of magnetite to fayalite 18:82.

### Example 1

100.0 g of fayalite waste is weighted which is an aliquot part of Sample 1 having a ratio of magnetite to fayalite 47:53 and it is subjected to a wet magnetic separation in a ratio of fayalite to water 1:4. The separated magnetic phase representing 92 % of the starting fayalite waste is added to 5% of sodium hydroxide solution and is heated with stirring for 1 hour at 45°C. It is filtered at the same temperature and the filtrate is heated to boiling temperature obtaining a suspension of the separated copper oxide. Filtration is carried out again and the clear filtrate is neutralized in a subsequent step to separate aluminum, zinc and a part of the silicone. The solid phase obtained after the filtration of the alkali suspension at 45°C is added to a hot solution of oxalic acid with a concentration of 12% and a ratio of the magnetic phase to the solution of 10:90. The suspension is treated at continuous stirring at 95°C for 1 hour adding all the time a 5% hydrogen peroxide solution. Upon completion of the leaching process the biphasic system is treated with a magnetic separator and the non-reacted magnetic phase is separated, washed and dried. The total amount of the obtained magnetic phase is 21% with regard to the fayalite waste and the ratio of magnetite to fayalite in the non-reacted magnetic phase is 89:11.

The iron(III) oxalate obtained after the magnetic separator is partly precipitated at pH 6.5 - 7.0 with 10% of sodium hydroxide solution and it is filtered, washed with water and dried at 180°C. The X-ray phase analysis revealed two crystalline phases - cristobalite in a quantity of 28% and 67% of ferrihydrite. The total amount of the ferrihydrite phase containing silicone dioxide is 36% regarding the starting amount of the fayalite waste.

According to the general methodology of the method after the intermediate precipitation at a neutral pH and the separation of the silicone dioxide as co-precipitated together with a part of the iron as iron hydroxide a practically pure solution of iron(III) oxalate is obtained.

This is added to a 10% of sodium hydroxide solution at temperature of 45-55°C maintaining the pH above 12 by means of adding an additional quantity of the sodium hydroxide. The obtained precipitate remains for 1 hour in the precipitator and is filtered. It is washed once with 5% of sodium hydroxide solution and then washed with deionized water until a neutral pH value.

This is dried at 140°C. The X-ray phase analysis reveals a partially dehydrated amorphous phase and the Mossbauer analysis confirms the sole presence of ferrihydrite.

### Example 2

100.0 g as an aliquot part of Sample 2 is weighted having a ratio of magnetite to fayalite of 78:22 and subjected to a wet magnetic separation and a preliminary leaching with an alkali hydroxide under the same conditions as in Example 1. The quantity of the separated magnetic phase is 97% regarding the starting fayalite waste. This phase is added to a hot solution of oxalic acid with concentration of 15% and is treated for 3 hours under the conditions and manner of Example 1.

The separated magnetic phase after the magnetic separator is 17% regarding the starting quantity of the fayalite waste and the ratio of magnetite to fayalite is 74:3.

The solution of iron(III) oxalate separated after the magnetic separator is partially precipitated at pH 6.5 - 7.0 with 10% of sodium hydroxide solution and filtered, washed with water and dried at 140°C. The X-ray phase analysis reveals two amorphous phases with a rise of the spectrum in the region of the cristobalite and ferrihydrite peaks and the Mossbauer analysis reveals the presence of a sole iron containing phase with the configuration of ferrihydrite.

According to the general methodology of the method the solution of iron(III) oxalate is added into 10% of sodium hydroxide solution at temperature of 60-65°C maintaining the pH above 12 adding an additional quantity of the sodium hydroxide. The obtained precipitate is allowed to stay in the precipitator for 1 hour and is filtered. It is washed once with 5% sodium hydroxide solution and then washed with deionized water until a neutral pH value.

This is dried at 180°C. The X-ray analysis reveals a partially dehydrated amorphous phase and the Mossbauer analysis confirms the presence of ferrihydrite only.

### Example 3

100.0 g of fayalite waste is weighted as an aliquot part of Sample 3 having a ratio of magnetite to fayalite of 67:33. The treatment with wet magnetic separation and subsequent leaching with an alkali hydroxide is carried out identically to the conditions and manner of Example 1 and the leaching with oxalic acid - identically to the conditions of Example 2.

In this treatment variation no magnetic separation of the obtained oxalate pulp is applied but a 10% of sodium hydroxide solution is added thereto till pH 12. The resulting precipitate which is a mixture of precipitated iron hydroxide and a phase containing magnetite is filtered, washed until neutral reading of pH and dried at 140°C. The resulting material is heated at temperature of 850°C for 30 minutes with a subsequent rise of the temperature to 950°C remaining at this temperature for the duration of 1 hour.

The X-ray phase analysis registers the presence of 18% of cristobalite, 76% of hematite and 6% of magnetite in the obtained product.

### Example 4

100.0 g of fayalite waste is weighted as an aliquot part of Sample 4 having a ratio of magnetite to fayalite of 18:82. The sample is subjected to a wet magnetic separation with the purpose to separate the non-magnetic phase. Its quantity after the filtration of the suspension is 23% regarding the starting fayalite waste.

The magnetic phase is subjected to a treatment with 10% of sodium hydroxide solution for the duration of 2 hours and at temperature of 65°C at a continuous stirring. After filtration the filtrate is heated to temperature of 95-100°C for the duration of 2 hours and filtered again to separate the formed copper oxide.

The precipitate after the initial filtration containing magnetic phase without copper salts is subjected to leaching with 15% hot oxalic acid solution for 2 hours and at temperature of 95°C.

The further treatment thereof is carried out in the manner and under the conditions of Example 3, with thermic treatment at 850°C for 2 hours after drying at 140°C.

The resulting product contains 9% of cristobalite, 2% of magnetite and 86% of hematite.

### Example 5

Similarly to Example 3 100.0 g of fayalite waste is weighted as an aliquot part of Example 3 having a ratio of magnetite to fayalite of 67:33. Its treatment by wet magnetic separation and subsequent leaching with an alkali hydroxide is carried out identically to the conditions and manner of Example 1 and the leaching with oxalic acid - identically to the conditions of Example 2.

In this treatment variation magnetic separation of the obtained oxalate pulp is not applied as well but a 10% of sodium hydroxide solution is added thereto up-to pH 12. The resulting precipitate which is a mixture of a precipitated iron hydroxide and a magnetite containing phase as well as some adsorpted quantities of alkali silicates is filtered and dried at 140°C. The resulting material is dissolved in a 10% of sulphuric acid and the resulting suspension is filtered. The precipitate of silicate compounds is washed until a neutral reaction. The obtained filtrate is precipitated partially at the temperature of the environment up-to pH 6.5-7.0 with a 10% of sodium hydroxide solution, the suspension is filtered, the precipitate is washed and dried to 100°C. The secondary filtrate remaining after the intermediate precipitation in the neutral pH region is heated to 65-70°C and is precipitated at pH 12 with a 10% of sodium hydroxide. After washing up-to neutral pH values it is dried at 160°C.

The X-ray phase analysis registered the presence of two iron containing phases in the alkaline precipitated product only - a partially dehydrated iron hydroxide and ferrihydrite and in the product precipitated in the neutral pH region is registered only an amorphous iron hydroxide phase.

### Example 6

Fayalite waste is treated under the conditions and according to the methodology of Example 5 with the difference that the precipitate resulting of the precipitation of the oxalate pulp at pH 12, without being washed and dried, is dissolved with a 10% of sulphuric acid solution whereupon the quantities of sodium oxalate contained in the wet precipitate are converted to oxalic acid. The suspension is stirred at 50°C for 1 hour whereupon it is filtered and the clear filtrate containing divalent and trivalent forms of iron is added to a sodium hydroxide solution, monitoring the pH of the process to be above 12. The resulting product is filtered, washed and dried to 120°C obtaining a black iron(II, III) oxide with a ratio of Fe(III) : Fe(II) = 2.11 : 0.89.

## Claims

1. A method of processing refuse of flotation processing of ore concentrates containing iron and comprising steps of leaching with oxalic acid at continuous stirring and treatment with hydroxide of an alkali metal at a raised temperature, **characterized in that** it comprises the following steps:
(a) a preliminary wet magnetic separation for the separation of the iron containing phase from the silicate non-magnetic part;
(b) mixing of the iron containing phase with a 5-10% of aqueous alkali hydroxide at temperature of 45-100°C for 1-3 hours and separating the iron containing phase in the form of a pulp;
(c) leaching by means of treatment of the iron containing pulp of step (b) with a hot 12-15% aqueous oxalic acid solution at a continuous stirring and heating to 95°C for 1-3 hours adding continuously a 3-5% of hydrogen peroxide solution;
(d) mixing of the oxalate solution of step (c) with an aqueous hydroxide solution of an alkali metal at temperature of 20-25°C and pH 7-12 and allowing it to stay for 1-2 hours;
(e) mixing of the filtrate of step (d) with an aqueous solution of alkali hydroxide at pH of at least 12 and heating up-to 55-60°C for 1 hour.

2. A method of processing refuse of flotation processing of ore concentrates containing iron according to claim 1, **characterized in that** at step (c) after the leaching a direct magnetic separation of the reaction mixture is applied to separate the magnetic phase.

3. A method of processing refuse of flotation processing of ore concentrates containing iron according to claim 1, **characterized in that** the precipitate of step (d) is subjected to drying and heating at 850-1000°C in an oxidative medium.

4. A method of processing refuse of flotation processing of ore concentrates containing iron according to claim 3, **characterized in that** the dried precipitate of step (d) is subjected to dissolving with sulphuric acid, and a secondary precipitation.

5. A method of processing refuse of flotation processing of ore concentrates containing iron according to claim 1, **characterized in that** the wet precipitate of step (d) is dissolved in a 10% of aqueous solution of sulphuric acid without a preliminary washing.

## Patentansprüche

1. Verfahren zur Verarbeitung von Eisen enthaltenden Industrieabfall aus Flotationsverarbeitung von Erzkonzentraten, das die Schritte von Auslaugen mit Oxalsäure bei kontinuierlichem Rühren und Behandlung mit Hydroxid eines Alkalimetalls bei erhöhter Temperatur umfasst,
**dadurch gekennzeichnet, dass** es die folgenden Schritte umfasst:
(a) eine vorläufige nasse magnetische Separation für eine Trennung der Eisen enthaltenden Phase von dem nicht-magnetischen Silikatteil;
(b) Mischen der Eisen enthaltenden Phase mit einer 5-10%-igen wässrigen Lösung von Alkalihydroxid bei einer Temperatur von 45 bis 100°C für 1 bis 3 Stunden und Abtrennen der Eisen enthaltigen Phase in Form einer Pulpe;
(c) Auslaugen durch Behandlung der Eisen enthaltigen Pulpe aus Schritt (b) mit einer heißen 12 bis 15%-igen wässrigen Lösung von Oxalsäure bei kontinuierlichem Rühren und Erwärmen auf 95°C für 1 bis 3 Stunden, wobei kontinuierlich eine 3 bis 5 %-ige Wasserstoffperoxidlösung zugegeben wird;
(d) Mischen der Oxalatlösung von Schritt (c) mit einer wässrigen Lösung von Hydroxid eines Alkalimetalls bei einer Temperatur von 20 bis 25°C und einem pH-Wert von 7 bis 12 und Lassen diese für 1 bis 2 Stunden bleiben;
(e) Mischen des Filtrats von Schritt (d) mit einer wässrigen Lösung von Alkalihydroxid bei einem pH-Wert von mindestens 12 und Erhitzen auf 55 bis 60 °C für 1 Stunde.

2. Verfahren zur Verarbeitung von Eisen enthaltenden Industrieabfall aus Flotationsverarbeitung von Erzkonzentraten, nach Anspruch 1, **dadurch gekennzeichnet, daß** in Schritt (c) nach dem Auslaugen eine direkte magnetische Separation des Reaktionsgemisches zur Trennung der magnetischen Phase angewendet wird.

3. Verfahren zur Verarbeitung von Eisen enthaltenden Industrieabfall aus Flotationsverarbeitung von Erzkonzentraten nach Anspruch 1, **dadurch gekennzeichnet, daß** der Niederschlag von Schritt (d) einem Trocknen und Weissglühen (Kalzinieren) bei 850-1000°C in einem oxidativen Medium unterworfen wird.

4. Verfahren zur Verarbeitung von Eisen enthaltenden Industrieabfall aus Flotationsverarbeitung von Erzkonzentraten nach Anspruch 3, **dadurch gekennzeichnet, daß** der getrocknete Niederschlag von Schritt (d) einer Auflösung mit Schwefelsäure und einer sekundären Ausfällung unterworfen wird.

5. Verfahren zur Verarbeitung von Eisen enthaltenden Industrieabfall aus Flotationsverarbeitung von Erzkonzentraten nach Anspruch 1, **dadurch gekennzeichnet, daß** der nasse Niederschlag von Schritt (d) in einer 10%-igen wäßrigen Lösung von Schwefelsäure ohne vorheriges Waschen gelöst wird.

## Revendications

1. Procédé pour le traitement des résidus industriels de traitement par flottation des minéraux enrichi en fer, comprenant des étapes de lixiviation avec de l'acide oxalique sous agitation constante et de traitement avec de l'hydroxyde de métal alcalin à une température élevée, **caractérisé en ce qu'**il comprend les étapes suivantes:
(a) séparation humide magnétique préliminaire pour séparer la phase ferrique de la portion non magnétique silicate;
(b) mélange de la phase ferrique avec 5-10 % en poids d'une une solution aqueuse d'hydroxyde de métal alcalin à une température comprise entre 45 et 100 °C pendant 1-3 heures, et séparation de la phase ferrique sous la forme d'une pulpe;
(c) lixiviation par traitement de la pulpe ferrique de l'étape (b) avec 12 à 15 % en poids d'une solution aqueuse chaude d'acide oxalique sous agitation constante et réchauffement à 95 °C pendant 1-3 heures, en ajoutant en continu 3-5 % en poids d'une solution de peroxyde d'hydrogène;
(d) mélange de la solution oxalate issue de l'étape (c) avec une solution aqueuse d'hydroxyde de métal alcalin à une température comprise entre 20 et 25 °C et à un pH de 7 à 12, et délaissement la reposer pendant 1-2 heures;
(e) mélange du filtrat de l'étape (d) avec une solution aqueuse d'hydroxyde métal alcalin à un pH d'au moins 12 et réchauffement à une température comprise entre 55 et 60 °C pendant 1 heure.

2. Procédé pour le traitement des résidus industriels du traitement de flottation des minéraux enrichi en fer selon la revendication 1, **caractérisé en ce que** pandant l'étape (c), après la lixiviation, une séparation magnétique directe du mélange réactionnel est appliquée pour séparer la phase magnétique.

3. Procédé pour le traitement des résidus industriels du traitement de flottation des minéraux enrichi en fer selon la revendication 1, **caractérisé en ce que** le précipité de l'étape (d) est soumis à un séchage et une calcination à une température comprise entre 850 et 1000 °C dans un environnement oxidant.

4. Procédé pour le traitement des résidus industriels du traitement de flottation des minéraux enrichi en fer selon la revendication 3, **caractérisé en ce que** le précipité séché de l'étape (d) est soumis à une dissolution avec de l'acide sulfurique et à une reprécipitation.

5. Procédé pour le traitement des résidus industriels du traitement de flottation des minéraux enrichi en fer selon la revendication 1, **caractérisé en ce que** le précipité humide de l'étape (d) est dissous sans lavage préalable dans 10 % en poids d'une solution aqueuse d'acide sulfurique.
